# EUROPEAN PATENT SPECIFICATION

(11) **EP 2 055 081 B1**
(45) Date of publication and mention of the grant of the patent: **26.09.2018**
(21) Application number: 07793584.9
(22) Date of filing: 21.08.2007
(51) Int. Cl.: H04L 29/10, G09G 5/00

(54) **DDC COMMUNICATION MODULE**
DDC-KOMMUNIKATIONSMODUL
MODULE DE COMMUNICATION DDC

(30) Priority: 21.08.2006 KR 20060078764
(43) Date of publication of application: 06.05.2009
(73) Proprietor: Opticis Co., Ltd., Seongnam-city, Gyeonggi-do 462-716 (KR)
(72) Inventor: BAE, Tae-Hoon, Gyeonggi-Do (KR); JUNG, Won-Seok, Gyeonggi-do 446-910 (KR); KIM, Jong-Wook, Seoul 136-102 (KR)
(74) Representative: Ambrosini, Stéphane
(86) International application number: PCT/KR2007/003980
(87) International publication number: WO 2008/023914

(56) References cited:
- KR-A- 20020 067 119
- KR-A- 20030 038 086
- US-A1- 2003 214 507
- US-A1- 2006 139 344
- US-B2- 7 009 616

## Description

### TECHNICAL FIELD

The present invention relates to a display data channel (DDC) communication module, and more particularly, to a DDC communication module adopting an inter-integrated circuit(I²C) communication protocol.

### BACKGROUND ART

A display data channel (DDC) communication module employing an inter-integrated circuit (I²C) is disclosed in U.S. Patent Publication No. 2003-0053172 lodged by the present applicant, entitled "Optical Communication Interface Module Connected to Electrical Communication Interface Module of I²C Communication Protocol".

A data display system transmitting video data and audio data from a source device to a display unit is disclosed in U.S. Patent Publication No. 2003/0214507 A1. A repeater is used to read EDID data from the display device and to provide it to a host device.

Further, U.S. Patent Publication No. 2006/139344 A1 shows a display monitor device using a DDC access switch providing access to the EDID, whether the monitor is powered on or off.

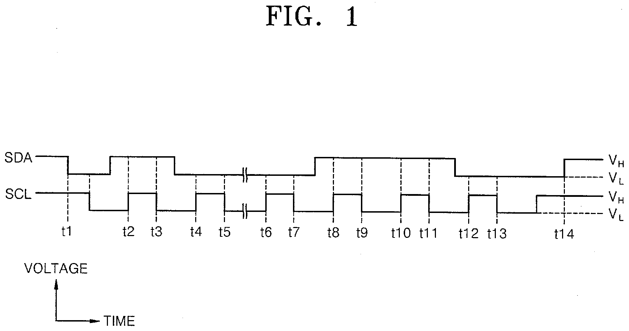

FIG. 1 is a timing diagram for explaining an I²C communication protocol.

Referring to FIG. 1, the I²C communication protocol is a protocol for performing serial communication using only two channels, that is a channel for a serial data signal SDA and a channel for a serial clock signal SCL, without a channel for a control signal, unlike a conventional serial communication protocol. According to the I²C communication protocol, whenever the serial clock signal SCL is a logic level '1' (a high voltage level), the state of the serial data signal SDA is set.

A time t1 at which the serial data signal SDA falls from a logic level '1' to a logic level '0' (a low voltage level), while the serial clock signal SCL is a logic level '1', is a starting time of a data packet. A time t14 at which the serial data signal SDA rises from a logic level '0' to a logic level '1', while the serial clock signal SCL is a logic level '1 (a high voltage level), is a terminating time of the data packet. Accordingly, in the period between t1 and t14 during which the data package is transmitted, the serial data signal SDA must not undergo logic transition while the corresponding serial clock signal SCL is a logic level '1',

Data with a logic level '1', data with a logic level '0', data with a logic level '0', data with a logic level '1', data with a logic level '1', and data with a logic level '0' are sequentially transmitted or received, respectively, for the duration between t2 and t3, for the duration between t4 and t5, for the duration between t10 and t11, and for the duration between t12 and t13, in which the serial clock signal SCL is a logic level '1'.

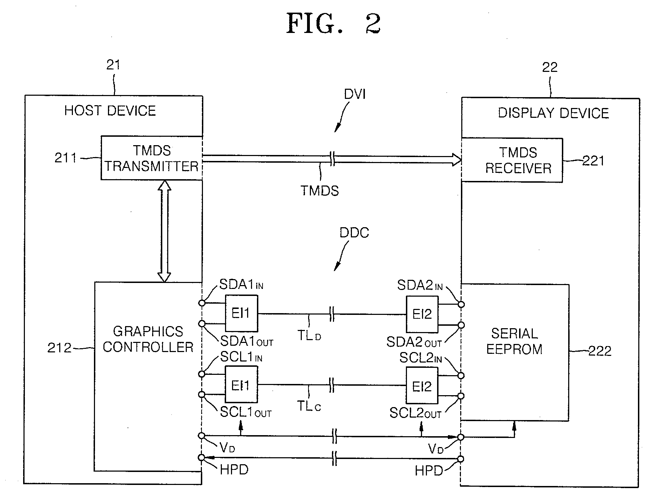

FIG. 2 is a block diagram of a conventional digital visual interface (DVI) system DVI including a conventional DDC communication module DDC. Referring to FIG. 2, the conventional DVI system DVI includes: a host device 21 including a transition minimized differential signaling (TMDS) transmitter 211 and a graphics controller 212; TMDS communication lines TMDS; the conventional DDC communication module DDC; and a display device 22 including a TMDS receiver 221 and a serial electrically erasable and programmable read only memory EEPROM 222.

Extended display identification data (EDID), which contains information on the configuration and characteristics of the display device 22, is stored in the serial EEPROM 222 of the display device 22. According to rules of the video electronics standard association (VESA), an 8-bit access address of the serial EEPROM 222 of the display device 22 is "1010000x". That is, the access address of the serial EEPROM 222 of the display device 22 is "10100001" in a read mode and "10100000" in a write mode.

The graphics controller 212 of the host device 21 reads the EDID stored in the serial EEPROM 222 of the display device 22 through I²C communication, and controls the operation of the TMDS transmitter 211 according to the read EDID. Accordingly, the TMDS transmitter 211 transmits image signals and clock signals to the TMDS receiver 221 via the TMDS communication lines TMDS.

The conventional DDC communication module DDC includes I²C interfaces EI1 and EI2, a serial data transmitting/receiving line TL_{D}, a serial clock transmitting/receiving line TL_{C}, a DDC power line between power terminals V_{D}, and a connection state line between interface signal terminals HPD.

The I²C interfaces EI1 and EI2 connected to the serial data transmitting/receiving line TL_{D} respectively transmit serial data from serial data output terminals SDA1_{OUT} and SDA2_{OUT} to the opposite I²C interfaces EI1 and EI2 via the serial data transmitting/receiving line TL_{D}, and respectively input serial data from the serial data transmitting/receiving line TL_{D} to serial data input terminals SDA1_{IN} and SDA2_{IN}.

Likewise, the I²C interfaces EI1 and EI2 connected to the serial clock transmitting/receiving line TL_{C} respectively transmit clock signals from serial clock output terminals SCL1_{OUT} and SCL2_{OUT} to the opposite I²C interfaces EI1 and EI2 via the serial clock transmitting/receiving line TL_{C}, and respectively input clock signals from the serial clock transmitting/receiving line TL_{C} to serial clock input terminals SCL1_{IN} and SCL2_{IN}.

The graphics controller 212 supplies a direct current (DC) voltage via the DDC power line between the power terminals V_{D}.

Since data with a logic level "1" is applied to the HPD while the display device 22 is operated, the graphics controller 212 of the host device 21 can determine whether the host device 21 is connected to the display device 22.

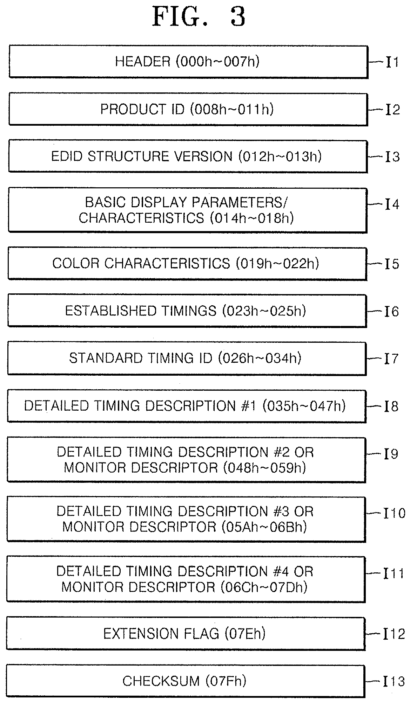

EDID defined by a standard published by VESA will now be explained with reference to FIG. 3. FIG. 3 is a block diagram of EDID defined by a standard of VESA.

Referring to FIG. 3, EDID includes 13 items I1 through I13.

In areas with addresses 000h through 007h, a header is stored as the first item I1.

In areas with addresses 008h through 011h, product identification (ID) is stored as the second item.

In areas with addresses 012h through 013h, the EDID structure version is stored as the third item I3.

In areas with addresses 014h through 018h, basic display parameters/characteristics are stored as the fourth item I4.

In areas with addresses 019h through 022h, color characteristics are stored as the fifth item 15.

In areas with addresses 023h through 025h, established timings are stored as the sixth item I6.

In areas with addresses 026h through 034h, standard timing ID is stored as the seventh item I7.

In areas with addresses 035h through 047h, a first detailed timing description or a monitor descriptor is stored as the eighth item I8.

In areas with addresses 048h through 059h, a second detailed timing description or a monitor descriptor is stored as the ninth item I9.

In areas with addresses 05Ah through 06Bh, a third detailed timing description or a monitor descriptor is stored as the tenth item I10.

In areas with addresses 06Ch through 07Dh, a fourth detailed timing description or a monitor descriptor is stored as the eleventh item I11.

In an area with an address 07Eh, an extension flag is stored as the twelfth item I12.

In an area with an address 07Fh, a checksum is stored as the thirteenth item I13.

However, the conventional DDC communication module DDC of FIG. 2 has problems of noise and signal attenuation in long range communication.

### DETAILED DESCRIPTION OF THE INVENTION

### TECHNICAL PROBLEM

The present invention provides a display data channel (DDC) communication module that can prevent noise and signal attenuation in long range communication.

### TECHNICAL SOLUTION

According to an aspect of the present invention, there is provided a DDC communication module configured to read and store extended display identification data (EDID) from a memory of a display device and provide the stored EDID to a host device, the DDC communication module comprising: a serial electrically erasable and programmable read only memory (EEPROM), a comparator, and a controller.

The EEPROM is configured to store the EDID read from the memory of the display device.

The comparator is configured to provide a logical output indicating that the comparator is connected to the display device or the host device.

The controller is configured to read and store the EDID from the memory of the display device, or provides EDID stored in the serial EEPROM to the host device, according to the logical output state of the comparator.

When the DDC communication module is connected to a DDC port of the display device by a user's operation, EDID stored in the display device may be read and stored in the DDC communication module.

Also, when the DDC communication module is connected to a DDC port of the host device by a user's operation, EDID stored in the DDC communication module may be read and stored in the host device.

### ADVANTAGEOUS EFFECTS

Accordingly, the DDC communication module can overcome the problems of noise and signal attenuation in long range communication. Furthermore, since no cable for DDC communication is necessary, the DDC communication module is economical.

### DESCRIPTION OF THE DRAWINGS

FIG. 1 is a timing diagram for explaining an inter-integrated circuit (I²C) communication protocol.
FIG. 2 is a block diagram of a digital visual interface (DVI) system including a conventional display data channel (DDC) communication module.
FIG. 3 is a block diagram of extended display identification data (EDID) defined by a standard of the video electronics standards association (VESA).
FIG. 4 is a block diagram of a DVI system including a DDC communication module, according to an embodiment of the present invention.
FIG. 5 is a block diagram illustrating the configuration of the DDC communication module of the DVI system of FIG. 4, according to an embodiment of the present invention.
FIG. 6 is a flowchart illustrating an algorithm of a controller of the DDC communication module of FIG. 5, according to an embodiment of the present invention.

### MODE OF THE INVENTION

The present invention will now be described more fully with reference to the accompanying drawings, in which exemplary embodiments of the invention are shown.

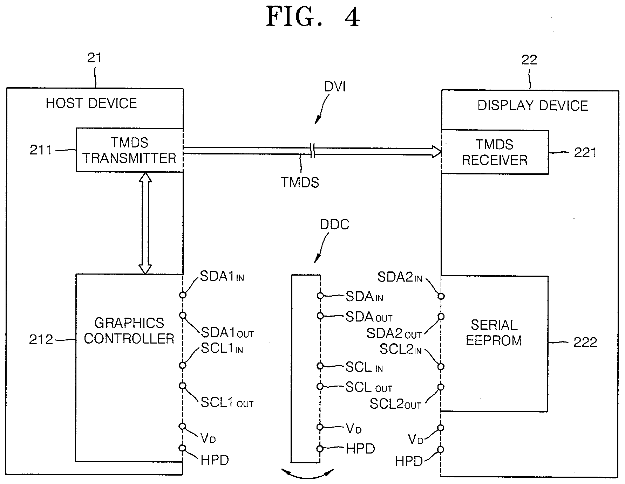

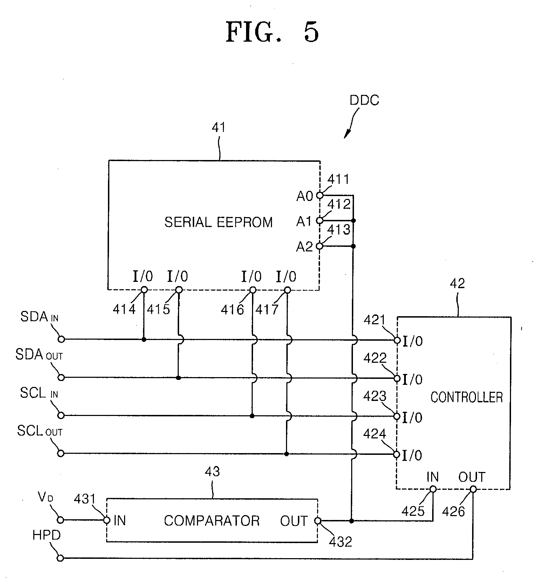

FIG. 4 is a block diagram of a digital visual interface (DVI) system DVI including a display data channel (DDC) communication module DDC according to an embodiment of the present invention. FIG. 5 is a block diagram illustrating the configuration of the DDC communication module DDC of the DVI system DVI of FIG. 4, according to an embodiment of the present invention.

Since the DVI system DVI of FIG. 4 is the same as the DVI system DVI of FIG. 2 except the DDC communication module DDC, a detailed explanation thereof will not be given.

Referring to FIGS. 4 and 5, the DDC communication module DDC reads and stores extended display identification data (EDID) stored in a serial electrically erasable and programmable read only memory (EEPROM) 222 of a display device 22 (see FIG. 3), and provides the stored EDID to a host device 21.

The DDC communication module DDC includes a serial EEPROM 41, a comparator 43, and a controller 42.

EDID is stored in the serial EEPROM 41. When 8 bits of an access address of the serial EEPROM 41 are first through eighth bits in ascending order, reference marks A0, A1, and A2 denote terminals setting the second through fourth bits.

As described above, according to rules of the video electronics standards association (VESA), an 8-bit access address of the serial EEPROM 222 of the display device 22 is "1010000x". That is, the access address of the serial EEPROM 222 of the display device 22 is "10100001" in a read mode and "10100000" in a write mode.

Accordingly, when the DDC communication module DDC is connected to a DDC port of the display device 22 by a user's operation, in order for EDID stored in the serial EEPROM 222 of the display device 22 to be read and stored in the serial EEPROM 41 of the DDC communication module DDC, an access address of the serial EEPROM 41 of the DDC communication module DDC should be different from that of the serial EEPROM 222 of the display device 22.

Also, when the DDC communication module DDC is connected to a DDC port of a host device 21 by a user's operation, in order for EDID stored in the DDC communication module DDC to be provided to the host device 21, the access address of the serial EEPROM 41 of the DDC communication module should be the same as that of the serial EEPROM 222 of the display device 22.

The comparator 43 outputs logic data indicating that the comparator 43 is connected to the display device 22 or the host device 21.

Potentials applied to DDC power terminals V_{D} of all display devices 22 range from 0 to 2 V, and potentials applied to DDC power terminals V_{D} of all host devices 21 range from 4 to 5 V. The comparator 43 outputs data with a logic level "1" when connected to a DDC power terminal V_{D} of the display device 22, and outputs data with a logic level "0" when connected to a DDC power terminal V_{D} of the host device 21.

Accordingly, when the comparator 43 is connected to the DDC power terminal V_{D} of the display device 22, an access address of the serial EEPROM 41 becomes "1010111x" due to the data with the logic level "1". That is, since the access address of the serial EEPROM 41 becomes "10101111" in a read mode and "10101110" in a write mode, the access address of the serial EEPROM 41 is different from a standard access address "1010000x" of the serial EEPROM 222 of the display device 22.

On the contrary, when the comparator 43 is connected to the DDC power terminal V_{D} of the host device 21, an access address of the serial EEPROM 41 becomes "1010000x" due to the data with the logic level "0". That is, since an access address of the serial EEPROM 41 becomes "10100001" in a read mode and "10100000" in a write mode, the access address of the serial EEPROM 41 is the same as the standard access address "1010000x" of the serial EEPROM 222 of the display device 22.

Accordingly, the controller 42 reads and stores EDID in the serial EEPROM 41, or provides EDID stored in the serial EEPROM 41 to the host device 21 according to logic data output from the comparator 43.

Accordingly, when the DDC communication module DDC is connected to the DDC port of the display device 22 by a user's operation, EDID stored in the display device 22 is read and stored in the DDC communication module DDC.

Also, when the DDC communication module DDC is connected to the DDC port of the host device 21 by a user's operation, EDID stored in the DDC communication module DDC is provided to the host device 21.

The DDC communication module DDC of FIGS. 4 and 5 can overcome the problems of noise and signal attenuation in long range communication. Also, since no cable for DDC communication is necessary, the DDC communication module DDC of FIGS. 4 and 5 is economical.

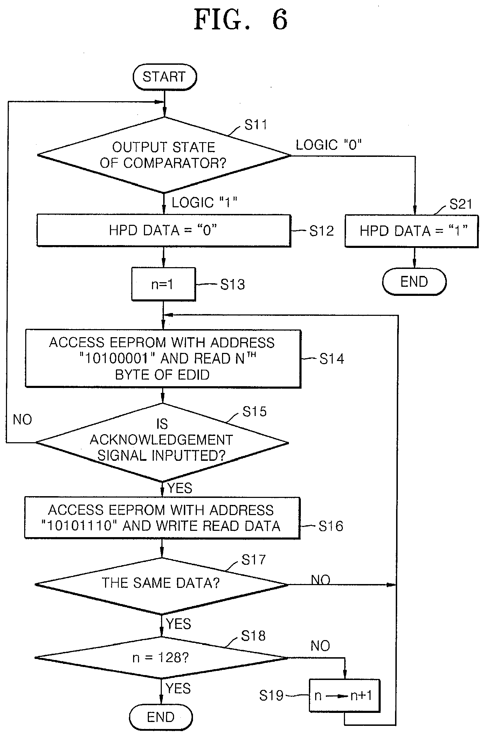

An algorithm of the controller 42 of the DDC communication module DDC of FIG. 5 will now be explained with reference to FIGS. 4 through 6. FIG. 6 is a flowchart illustrating an algorithm of the controller 42 of the DDC communication module of FIG. 5, according to an embodiment of the present invention

In operation S11, the controller 42 determines whether the comparator 43 outputs data with a logic level "0" or "1".

When the DDC communication module DDC is connected to the DDC port of the display device 22 and thus the comparator 43 outputs data with a logic level "1", the controller 42 operates as follows.

In operation S12, the controller 42 applies a data signal with a low logic level "0" to interface signal terminals "HPD".

In operation S13, the controller 42 sets a read count variable n to 1.
In operation S14, the controller 42 accesses the serial EEPROM 222 of the display device 22 with an address "10100001", and reads an n^{th} byte of EDID.

In operation S15, the controller 42 determines whether an acknowledgement signal is input from the display device 22.

If it is determined in operation S15 that an acknowledgement signal is not input from the display device 22, the controller 42 returns to operation S11.

If it is determined in operation S15 that an acknowledgement signal is input from the display device 22, the controller 42 operates as follows.

In operation S16, the controller 42 accesses the serial EEPROM 41 of the DDC communication module DDC with an address "10101110", and writes the read data.

In operation S17, the controller 42 determines whether the read data is the same as the written data. If it is determined in operation S17 that the read data is not the same as the written data, the process returns to operation S14.

If it is determined in operation S17 that the read data is the same as the written data, the process goes to operation S18. In operation S18, the controller 42 determines whether the read count variable n is 128 that is a final value.

If it is determined in operation S18 that the read count variable n is not 128, the process goes to operation S19. In operation S19, the read count variable n is increased by 1 and the process returns to operation S14.

If it is determined in operation S18 that the read count variable n is 128, read and write operations of the controller 42 end.

According to operations S11 through S19, when the DDC communication module DDC is connected to the DDC port of the display device 22 by a user's operation, EDID stored in the serial EEPROM 222 of the display device 22 is read and stored in the serial EEPROM 41 of the DDC communication module DDC.

On the contrary, in operation S12, when the DDC communication module DDC is connected to the DDC port of the host device 21 and thus the comparator 43 outputs data with a logic level "0", the controller 42 applies a data signal with a logic high level "1" to the interface signal terminals "HPD".

As described above, when the comparator 43 is connected to the DDC power terminal V_{D} of the host device 21, an access address of the serial EEPROM 41 of the DDC communication module DDC becomes "1010000x" due to the data with the logic level "0". That is, since an access address of the serial EEPROM 41 of the DDC communication module DDC becomes "10100001" in a read mode and "10100000" in a write mode, the access address of the serial EEPROM 41 of the DDC communication module DDC is the same as the standard access address of the serial EEPROM 222 of the display device 22.

Accordingly, the graphics controller 212 of the host device 21 receives EDID stored in the serial EEPROM 41 of the DDC communication module DDC and can control the TMDS transmitter 211 of the host device 21 according to the received EDID.

Of course, the graphics controller 212 of the host device 21 can use the same communication method with the display device 22.

While the present invention has been particularly shown and described with reference to exemplary embodiments thereof, it will be understood by those of ordinary skill in the art that various changes in form and details may be made therein without departing from the scope of the present invention as defined by the following claims. For example, a switch manually operated by a user may function as the comparator 43.

### INDUSTRIAL APPLICABILITY

As described above, the DDC communication module according to the present invention can overcome the problems of noise and signal attenuation in long range communication. Also, since no cable for DDC communication is necessary, the DDC communication module according to the present invention is economical.

## Claims

1. A display data channel (DDC) communication module configured to read and store extended display identification data (EDID) from a memory of a display device and provide the stored EDID to a host device, the DDC communication module **characterized in that** it comprises:
a serial electrically erasable and programmable read only memory (EEPFROM) configured to store the EDID read from the memory of a display device;
a comparator configured to provide a logical output having a first state that indicates connection to a DCC power terminal of the display device and having a second state, different from the first state, that indicates connection to a DCC power terminal of the host device; and
a controller configured to read and store the EDID from a memory of a display device, or providing EDID stored in the serial EEPROM to the host device, according to the logical output state of the comparator.

2. The DDC communication module of claim 1, wherein the comparator comprises an input terminal which is connected to a DDC power terminal of the display device or the host device by a user.

3. The DDC communication module of claim 2, wherein the comparator outputs data with a logic level "1" when connected to the DDC power terminal of the display device, and outputs data with a logic level "0" when connected to the DDC power terminal of the host device.

4. The DDC communication module of claim 3, wherein, when the comparator is connected to the DDC power terminal of the display device, an access address of the serial EEPROM of the DDC communication module is different from a standard access address of a serial EEPROM of the display device due to the data with the logic level "1".

5. The DDC communication module of claim 4, wherein, when the comparator is connected to the DDC power terminal of the host device, an access address of the serial EEPROM of the DDC communication module is the same as a standard access address of the serial EEPROM of the display device due to the data with the logic level "0".

## Patentansprüche

1. Display Data Channel (DDC)-Kommunikationsmodul, das dafür konfiguriert ist, erweiterte Anzeigeidentifizierungsdaten (EDID) aus einem Speicher einer Anzeigevorrichtung zu lesen und zu speichern und die gespeicherten EDID einer Hostvorrichtung bereitzustellen, wobei das DDC-Kommunikationsmodul **dadurch gekennzeichnet ist, dass** es umfasst:
einen seriellen, elektrisch löschbaren und programmierbaren Festwertspeicher (EEPROM), der dafür konfiguriert ist, die aus dem Speicher einer Anzeigevorrichtung gelesenen EDID zu lesen;
einen Komparator, der dafür konfiguriert ist, einen logischen Ausgang bereitzustellen, der einen ersten Zustand hat, welcher eine Verbindung zu einem DCC-Speiseanschluss der Anzeigevorrichtung anzeigt, und einen sich vom ersten Zustand unterscheidenden zweiten Zustand hat, welcher eine Verbindung zu einem DCC-Speiseanschluss der Hostvorrichtung anzeigt; und
einen Controller, der dafür konfiguriert ist, gemäß dem logischen Ausgangszustand des Komparators die EDID aus einem Speicher einer Anzeigevorrichtung auszulesen und zu speichern oder im seriellen EEPROM gespeicherte EDID der Hostvorrichtung bereitzustellen.

2. DDC-Kommunikationsmodul nach Anspruch 1, worin der Komparator einen Eingangsanschluss umfasst, der durch einen Benutzer mit einem DDC-Speiseanschluss der Anzeigevorrichtung oder der Hostvorrichtung verbunden wird.

3. DDC-Kommunikationsmodul nach Anspruch 2, worin der Komparator Daten mit einem Logikpegel "1" ausgibt, wenn er mit dem DDC-Speiseanschluss der Anzeigevorrichtung verbunden ist, und Daten mit einem Logikpegel "0" ausgibt, wenn er mit dem DDC-Speiseanschluss der Hostvorrichtung verbunden ist.

4. DDC-Kommunikationsmodul nach Anspruch 3, worin, wenn der Komparator mit dem DDC-Speiseanschluss der Anzeigevorrichtung verbunden ist, eine Zugriffsadresse des seriellen EEPROMs des DDC-Kommunikationsmoduls sich aufgrund der Daten mit dem Logikpegel "1" von einer Standardzugriffsadresse eines seriellen EEPROMs der Anzeigevorrichtung unterscheidet.

5. DDC-Kommunikationsmodul nach Anspruch 4, worin, wenn der Komparator mit dem DDC-Speiseanschluss der Hostvorrichtung verbunden ist, eine Zugriffsadresse des seriellen EEPROMs des DDC-Kommunikationsmoduls aufgrund der Daten mit dem Logikpegel "0" gleich einer Standardzugriffsadresse des seriellen EEPROMs der Anzeigevorrichtung ist.

## Revendications

1. Module de communication à canal de données d'affichage (DDC) configuré pour lire et stocker des données d'identification d'affichage étendues (EDID) à partir d'une mémoire d'un dispositif d'affichage et fournir les EDID stockées à un dispositif hôte, le module de communication DDC étant **caractérisé en ce qu'**il comprend :
une mémoire à lecture seule effaçable et programmable électriquement en série (EEPROM) configurée pour stocker les EDID lues à partir de la mémoire d'un dispositif d'affichage ;
un comparateur configuré pour fournir une sortie logique ayant un premier état qui indique la connexion à une borne d'alimentation DCC du dispositif d'affichage et ayant un deuxième état, différent du premier état, qui indique une connexion à une borne d'alimentation DCC du dispositif hôte ; et
un contrôleur configuré pour lire et stocker les EDID à partir d'une mémoire d'un dispositif d'affichage ou pour fournir les EDID stockées dans l'EEPROM en série au dispositif hôte, selon l'état de sortie logique du comparateur.

2. Module de communication DDC selon la revendication 1, dans lequel le comparateur comprend une borne d'entrée qui est connectée à une borne d'alimentation DDC du dispositif d'affichage ou du dispositif hôte par un utilisateur.

3. Module de communication DDC selon la revendication 2, dans lequel le comparateur génère des données avec un niveau logique « 1 » lorsqu'il est connecté à la borne d'alimentation DDC du dispositif d'affichage et génère des données avec un niveau logique « 0 » lorsqu'il est connecté à la borne d'alimentation DDC du dispositif hôte.

4. Module de communication DDC selon la revendication 3, dans lequel, lorsque le comparateur est connecté à la borne d'alimentation DDC du dispositif d'affichage, une adresse d'accès de l'EEPROM en série du module de communication DDC est différente d'une adresse d'accès standard d'une EEPROM en série du dispositif d'affichage du fait des données avec le niveau logique « 1 ».

5. Module de communication DDC selon la revendication 4, dans lequel, lorsque le comparateur est connecté à la borne d'alimentation DDC du dispositif hôte, une adresse d'accès de l'EEPROM en série du module de communication DDC est la même qu'une adresse d'accès standard d'une EEPROM en série du dispositif d'affichage du fait des données avec le niveau logique « 0 ».
